# EUROPÄISCHE PATENTANMELDUNG

(11) **EP 4 266 120 A1**
(43) Veröffentlichungstag der Anmeldung: **25.10.2023**
(21) Anmeldenummer: 23168388.9
(22) Anmeldetag: 18.04.2023
(51) Int. Cl.: G03B 11/04, H05B 3/06

(54) **STREULICHTBLENDE MIT ELEKTRISCHEM HEIZWIDERSTAND**

(30) Priorität: 19.04.2022 DE 102022109396
(71) Anmelder: Eichenauer Heizelemente GmbH & Co. KG, 76870 Kandel (DE)
(72) Erfinder: Leininger, Philippe, 67500 Haguenau (FR)
(74) Vertreter: Twelmeier Mommer & Partner

(57) **Zusammenfassung**

Beschrieben wird eine elektrisch beheizbare Streulichtblende für ein Bilderfassungsgerät eines Kraftfahrzeugs, mit einem Körper (1) aus Kunststoff. Erfindungsgemäß ist vorgesehen, dass der Körper (1) aus elektrisch isolierendem Kunststoff ist und in dem Körper (1) eine elektrische Heizleiterbahn aus Blech (2) angeordnet ist.

## Beschreibung

Die Erfindung geht von einer Streulichtblende mit den im Oberbegriff des Anspruchs 1 genannten Merkmalen aus, wie sie aus DE 10 2020 102 821 A1 bekannt ist.

Moderne Kraftfahrzeuge werden zunehmend mit Assistenz- und Sicherheitssystemen ausgestattet, die Daten von Bilderfassungseinheiten, wie beispielsweise Kameras, auswerten. Derartige Bilderfassungseinheiten enthalten in der Regel eine Streulichtblende, um eine Beeinträchtigung des Bildes, etwa durch optische Überlagerungen, zu minimieren. Ein Problem ergibt sich, wenn, beispielsweise durch Beschlagen, Reifbildung oder Einfrieren eines Sichtfensters der Bilderfassungseinheit oder auch einer Linse, eine Bilderfassung durch die Bilderfassungseinheit erschwert wird. Um diesem Problem zu begegnen werden elektrisch beheizbare Streulichtblenden verwendet. Die von der Streulichtblende abgestrahlte Wärme kann dann ein Sichtfenster (Scheibe) oder auch eine Linse von Eis und Beschlag befreien.

Aus der DE 10 2020 102 821 A1 ist eine Streulichtblende mit einem Körper aus einem elektrisch leitenden Kunststoff, nämlich einem PTC-Polymer bekannt, in den elektrische Leitstrukturen eingebettet sind. Indem an die elektrischen Leitstrukturen eine elektrische Spannung angelegt wird, lässt sich ein Heizstrom erzeugen, der durch den elektrisch leitenden Kunststoff fließt und diesen dabei erwärmt. Zwar lässt sich auf diese Weise der Körper der Streulichtblende gut beheizen und durch die Wärmestrahlung Eis und Beschlag von der Scheibe zuverlässig beseitigen, jedoch sind herkömmliche PTC-Polymere relativ teuer und hinsichtlich ihrer elektrischen und mechanischen Eigenschaften nicht optimal. So sind die hohe Masse und der hohe Einschaltstrom nicht in jeder Anwendung tolerierbar.

Aus der EP 2 644 005 B1 ist bekannt, eine Streulichtblende mit einer Heizfolie zu versehen, die auf die Streulichtblende aufgeklebt ist. Nachteilig sind dabei ein hoher Fertigungsaufwand, eine nicht optimale Wärmeübertragung und eine unbefriedigend lange Aufheizzeit.

Aufgabe der Erfindung ist es daher, einen Weg aufzuzeigen wie sich eine Streulichtblende kostengünstig fertigen lässt, die eine rasche Beheizung ermöglicht und eine lange Lebensdauer hat.

Die Aufgabe wird mit einer Vorrichtung gemäß Anspruch 1 gelöst. Vorteilhafte Weiterbildungen der Erfindung sind Gegenstand von Unteransprüchen.

Eine erfindungsgemäße Streulichtblende enthält als elektrischen Widerstand mindestens eine aus einem Blechteil gebildete Heizleiterbahn. Bevorzugt ist die Heizleiterbahn dabei aus dem Blech in der Art eines sogenannten Stanzgitters ausgestanzt. Die Heizleiterbahn kann aber auch auf andere Art aus einem Blech hergestellt werden, etwa durch Laserschneiden. Stanzgitter werden üblicherweise verwendet, um elektrische Anschlussverbindungen ohne nennenswerten Eigenwiderstand zu realisieren. Zur Verwendung als Heizelement wird bevorzugt mit einem Metallblech von höherem Eigenwiderstand durch einen mäandrierenden bzw. schleifenförmigen Verlauf miteinander verbundenen, vorwiegend parallel verlaufender Leiterbahnabschnitte zwischen zwei Anschlüssen eine möglichst lange, dünne Leiterbahn geschaffen, die mit wenig Masse und großer Fläche schnell Wärme erzeugen und abgeben kann. Hierzu ist die Heizleiterbahn in einen Körper aus elektrisch isolierendem Kunststoff eingebettet, beispielsweise indem die Heizleiterbahn mit elektrisch isolierendem Kunststoff umspritzt wurde. Als Stanzgitter lassen sich Heizleiterbahnen dabei kostengünstig aus Blech herstellen und ermöglichen somit einen kostengünstigen elektrischen Heizwiderstand mit vorteilhaften Eigenschaften, insbesondere einem Anlaufstrom, der nur unwesentlich über dem Betriebsstrom liegt.

Ist ein etwas höherer Anlaufstrom jedoch tolerierbar, kann ein Blechmaterial mit einem ausgeprägteren PTC-Verhalten gewählt werden. Dieses besteht vorzugsweise aus einer Legierung auf der Basis einer Eisen-Nickel-Legierung, die darüber hinaus weitere Elemente wie Chrom aufweisen kann. Der Nickelanteil liegt dabei insbesondere zwischen 65 und 75%, vorzugsweise bei ca. 70%, der Eisenanteil bei 25-35%, vorzugsweise bei ca. 30%; der Chromanteil liegt gegebenenfalls im Bereich von 0,5-2%, vorzugsweise ca. 1%. Der Temperaturkoeffizient α im weitgehend linearen Anwendungsbereich beträgt dabei bevorzugt > 2 × 10⁻³/K.

Der Körper der Streulichtblende kann dabei aus einem elektrisch isolierenden Kunststoff geschaffen werden, der sich gut spritzgießen lässt, vorteilhafte optische Eigenschaften hat und dauerhaft ist. Besonders vorteilhaft handelt es sich bei der erfindungsgemäßen Streulichtblende um ein fertig fallendes Bauteil, d.h. es sind keine weiteren Fertigungsschritte wie Kleben oder Steckermontage mehr erforderlich.

Der Körper der Streulichtblende kann in einem einzigen Schritt gebildet werden, etwa in dem die Heizleiterbahn in eine Spritzgießform eingelegt und dann mit einem elektrisch isolierenden Kunststoff umspritzt wird, der dann auch äußere Konturen der Streulichtblende bildet, beispielsweise Rasthaken zur Montage der Streulichtblende oder ein Gehäuse eines elektrischen Steckverbinders. Bevorzugt wird die aus einem Blech hergestellte Heizleiterbahn aber zunächst mit einem ersten elektrisch isolierenden Kunststoff zumindest teilweise umspritzt, beispielsweise einem Polyamid. Da das Blech, aus dem die Heizleiterbahn ausgeschnitten ist, sehr dünn ist, kann durch diese sogenannte Vorumspritzung eine handhabbare stabilere Einheit geschaffen werden. Der Auftrag des ersten Kunststoffes erfolgt dabei im Wesentlichen nur auf einer Seitenfläche. Danach erfolgt dann in einem weiteren Schritt mit einem zweiten Kunststoff die Endumspritzung, beispielsweise mit einem Polybutylenterephthalat oder einem Polyamid wie PA6-GB50.

In einer bevorzugten Ausgestaltungsvariante enthält der Kunststoff zur Endumspritzung Zusatzstoffe, die die Wärmeleitfähigkeit verbessern, etwa Ruß- oder Metallpartikel. Kunststoffen können einige Prozent Metallpartikel beigemischt werden, ohne dass dadurch die elektrische Isolationswirkung zerstört wird. Durch die Erhöhung der Wärmeleitfähigkeit auf bevorzugt mehr als 1 W/(m·K), äußerst bevorzugt auf mehr als 3 W/(m·K) wird die Wärme noch schneller durch den Kunststoff hindurch in den Raum zwischen der Streulichtblende und der Scheibe abgegeben, während die Wärmeleitung zur Unterseite durch die wärmeisolierende Vorumspritzung wie gewünscht unterbunden wird. Möglich ist aber auch der Einsatz eines homogenen, gut wärmeleitenden Kunststoffes für die Vorumspritzung.

Durch die Umspritzung in zwei Schritten lässt sich ein sehr präzises Bauteil herstellen, das darüber hinaus auch nur eine insgesamt sehr dünne Kunststoffschicht benötigt. Vorteilhaft lässt sich so Material einsparen und die Wärmekapazität reduzieren, sodass die Streulichtblende sehr rasch aufgeheizt werden kann.

Die Heizleiterbahn kann aus relativ dünnem Blech ausgestanzt werden. Denkbar ist aber auch eine andere Art der Herstellung, etwa durch Lasern. Bevorzugt hat das Blech eine Dicke von weniger als 0,5 mm, beispielsweise eine Stärke 0,1 mm bis 0,2 mm. Aus diesem Grund weist die Leiterbahn bevorzugt zunächst noch zahlreiche Verbindungsstege zwischen benachbarten Leiterbahnabschnitten auf, die erst nach der Vorumspritzung durchtrennt werden.

Weitere Einzelheiten und Vorteile der Erfindung werden an einem Ausführungsbeispiel unter Bezugnahme auf die beigefügten Zeichnungen erläutert. Gleiche und einander entsprechende Komponenten sind in den verschiedenen Zeichnungen mit übereinstimmenden Bezugszahlen versehen. Es zeigen:
- Fig. 1:: eine Ansicht einer erfindungsgemäßen Streulichtblende;
- Fig. 2: eine weitere Ansicht der Streulichtblende;
- Fig. 3: die Heizleiterbahn der Streulichtblende nach Durchtrennung der Verbindungsstege;
- Fig. 4: die Heizleiterbahn nach Vorumspritzung; und
- Fig. 5: eine weitere Ansicht der Heizleiterbahn nach Vorumspritzung.

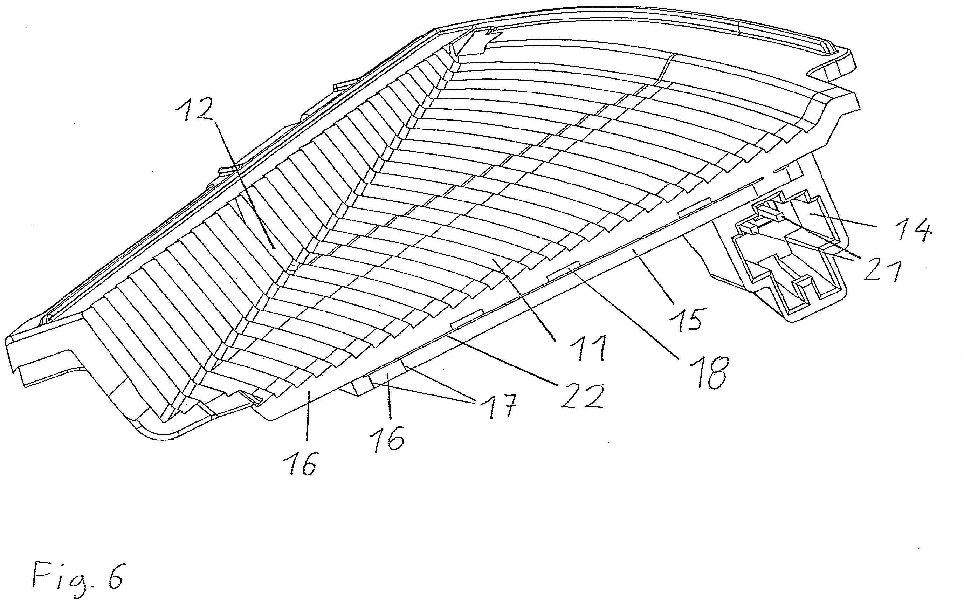

- Fig. 6: ein Querschnitt durch die Streulichtblende

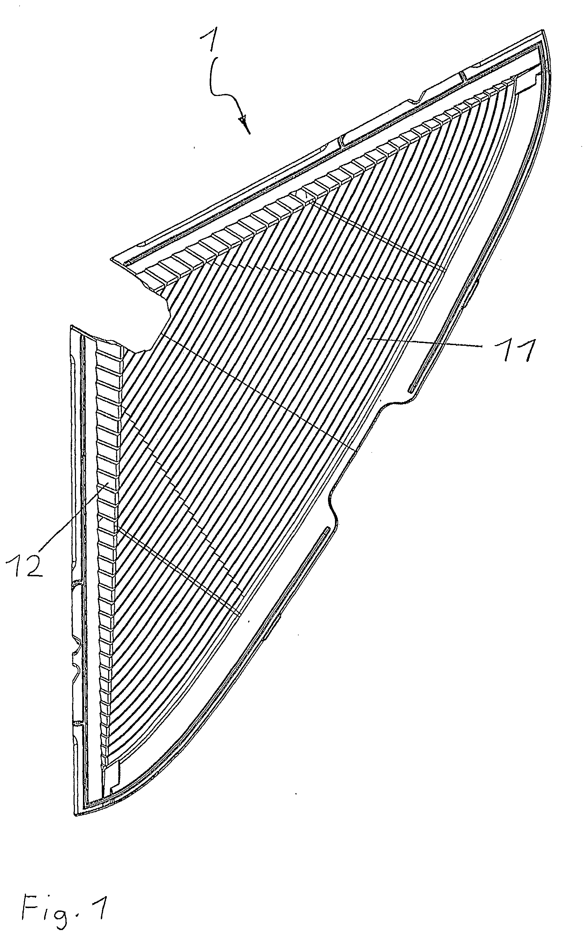

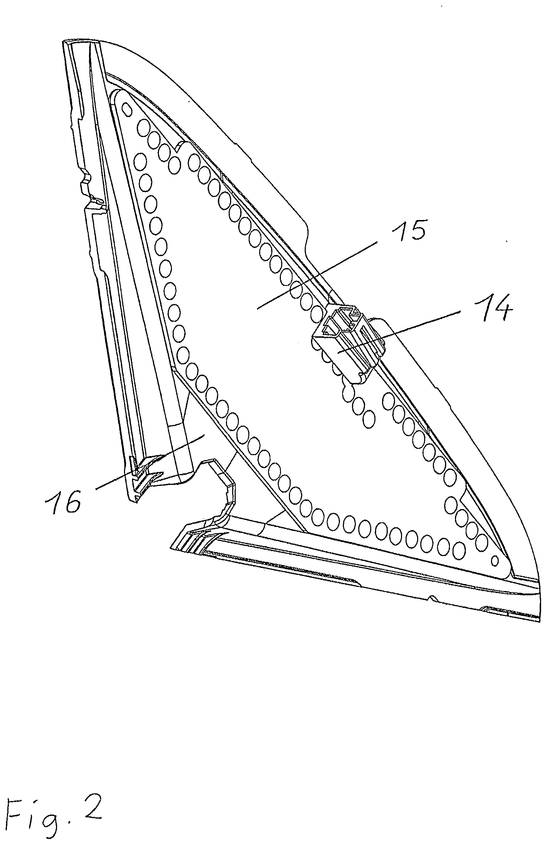

Die in den Figuren 1 und 2 gezeigte Streulichtblende hat einen Körper 1 aus Kunststoff, der einen Boden 11 und zwei davon ausgehende Seitenwände 12 aufweist. Der Boden 11 hat eine gestufte strukturierte Oberfläche, um durch Absorption und Streuung von Licht eine Beeinträchtigung einer Bilderfassung zu reduzieren.

Der Körper 1 der Streulichtblende kann nicht gezeigte Rasthaken ausbilden, mit denen die Streulichtblende in einem Fahrzeug bzw. an einer Fahrzeugkomponente befestigt werden kann, und ein Steckverbindergehäuse 14 zum Anschließen der Streulichtblende an eine Spannungsquelle.

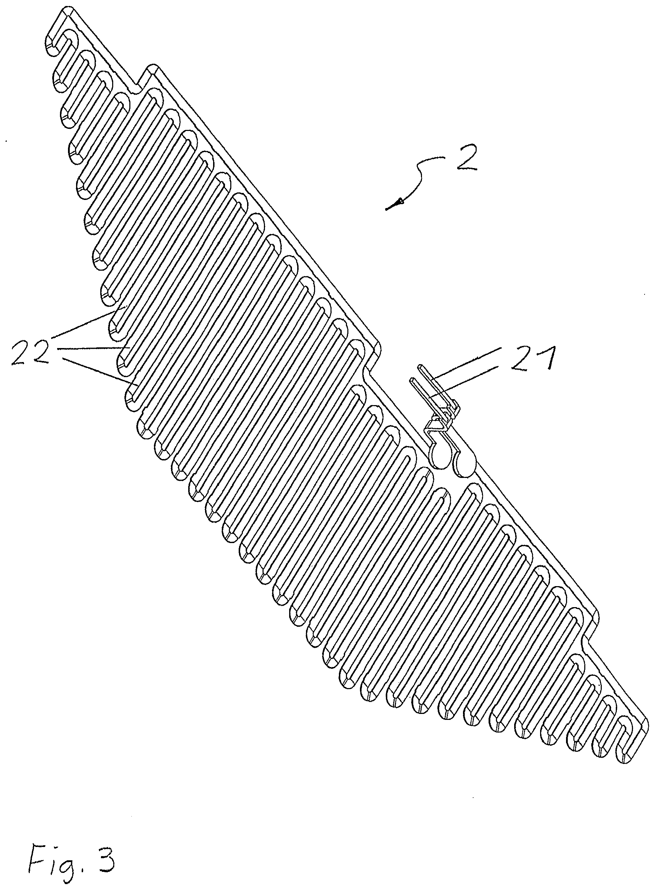

Der Körper 1 der Streulichtblende ist aus elektrisch isolierendem Kunststoff und umgibt eine in Fig. 3 dargestellte, hier beispielhaft als Stanzgitter ausgeführte, Heizleiterbahn 2, beispielsweise aus einer NiCr-Legierung. Das Stanzgitter bildet mit seinen einzelnen verbundenen Leiterbahnabschnitten 22 einen elektrischen Heizwiderstand, mit dem die Streulichtblende beheizbar ist, wobei die von der Streulichtblende abgestrahlte Wärme dann ein Sichtfenster (Scheibe) oder auch eine Linse von Eis und Beschlag befreien kann. Das Stanzgitter kann einstückig mit Steckerpins 21 ausgebildet sein, die in dem Steckverbindergehäuse 14 angeordnet sind und mit ihm zusammen einen elektrischen Steckverbinder bilden. Die Steckerpins 21 können aber auch separat hergestellt und danach mit dem Stanzgitter verbunden werden, etwa durch eine stoffschlüssige Verbindung wie Schweißen oder durch eine formschlüssige Verbindung wie Toxen, Crimpen oder Clinchen.

Separat gefertigte Steckerpins 21 können aus einem anderen Material als die Heizleiterbahn 2 hergestellt werden, etwa um Übergangswiderstände zu einem Gegensteckverbinder zu reduzieren. Beispielsweise können die Steckerpins 21 aus einer Kupferlegierung hergestellt werden, etwa CuSn6. Sowohl separat als auch einstückig mit der Heizleiterbahn 2 hergestellte Steckerpins 21 können eine Beschichtung aufweisen, beispielsweise verzinnt sein.

Die Heizleiterbahn 2 kann aus Blech ausgestanzt werden, das eine Stärke bevorzugt von 0,1 mm bis 0,2 mm hat, beispielsweise 0,12 mm bis 0,15 mm und das eine Länge von bevorzugt 1m bis 3m hat, beispielsweise 1,6m bis 2,3m. Um eine möglichst lange Heizleiterbahn 2 zu erzeugen ist der Heizleiter als nebeneinanderliegende einzelne, vorwiegend parallel verlaufende Leiterbahnabschnitte 22 mit Wendestellen jeweils an den Enden ausgeführt. Durch die so hergestellte lange, dünne Heizleiterbahn lässt sich beispielsweise eine Leistung von 15W erzeugen. Die Breite der Heizleiterbahn beträgt bevorzugt 1mm bis 1,5mm. Bei Bedarf kann die Leistung auch erhöht werden, indem die Leiterbahn kürzer, dicker oder breiter ausgelegt wird. Natürlich sind auch kleinere Leistungen mit umgekehrten Parametern denkbar. Weiterhin kann durch die Breite oder den Abstand der Heizleiterbahn die Flächenleistung variiert werden. Auf diese Weise kann beispielsweise in einem Bereich der Streulichtblende, der näher an einer Scheibe angeordnet ist, die Flächenleistung verringert werden, wodurch eine gleichmäßigere Erwärmung der Scheibe ermöglicht ist.

Bevorzugt sind die einzelnen parallelen Leiterbahnabschnitte 22 weitgehend entlang der kurzen Seiten der Streulichtblende ausgelegt. Dies verhindert lange gerade Bahnen zwischen den Wendestellen, die ungünstig im Hinblick auf die ungleichen Wärmeausdehnungskoeffizienten von metallischem Leiter und Kunststoffumspritzung sind. Grundsätzlich ist aber auch eine andere Bahnenanordnung denkbar, wie etwa gewellte Bahnen oder eine sogenannte bifilare Bahnenführung.

Der Körper 1 der Streulichtblende kann in einem Schritt hergestellt werden, indem die Heizleiterbahn 2 in eine Spitzgussform eingelegt und dann mit einem elektrisch isolierenden Kunststoff umspritzt wird. Ist jedoch die Heizleiterbahn 2 sehr dünn und dadurch mechanisch sehr instabil, kann sie aber auch zunächst mit einem ersten elektrisch isolierenden Kunststoff 15 vorumspritzt werden.

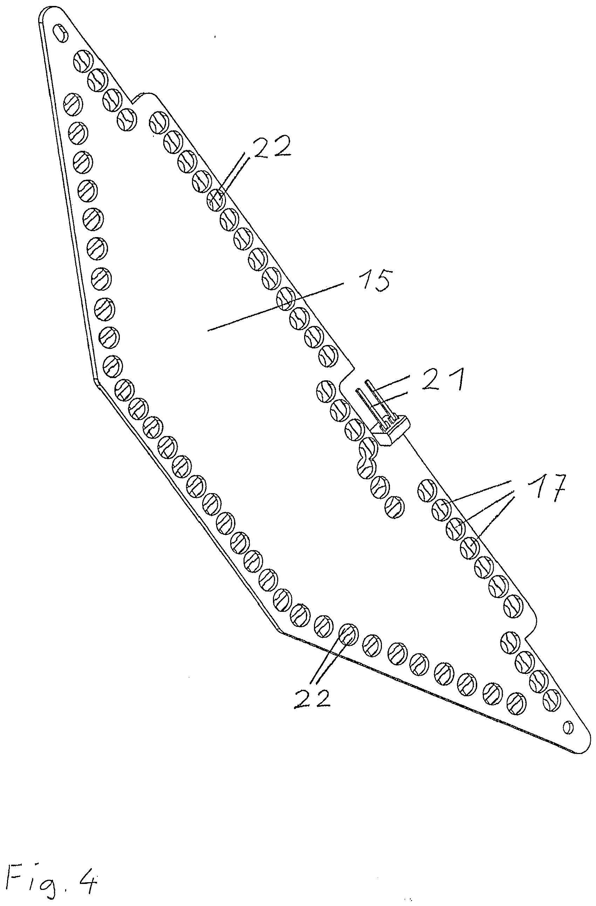

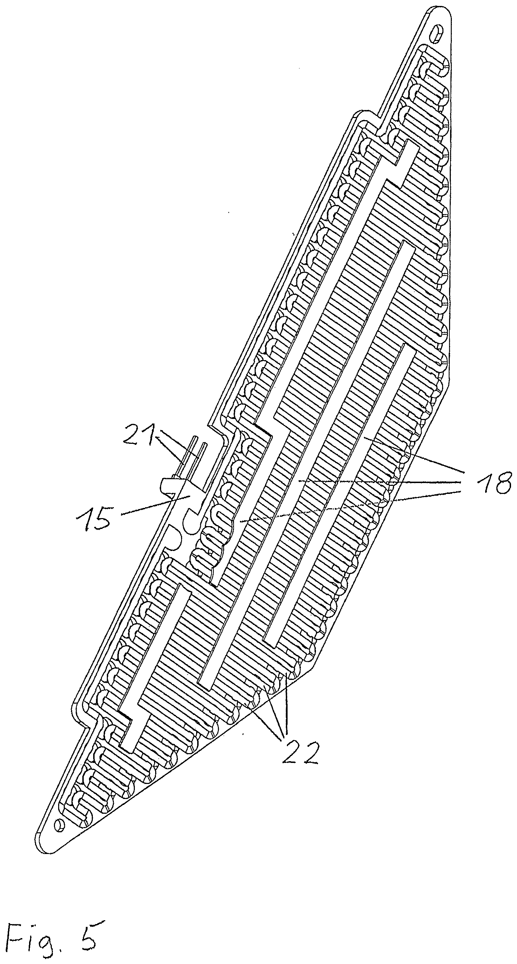

Die Figuren 4 und 5 zeigen eine mit einem ersten Kunststoff 15 umspritzte, beispielsweise als Stanzgitter ausgeführte, Heizleiterbahn 2 von ihrer Unterseite und Oberseite.

Der Auftrag des ersten Kunststoffes 15 erfolgt im Wesentlichen dabei bezogen auf die Streulichtblende nur auf der Unterseite des Stanzgitters. Vorsprünge im Spritzgusswerkzeug erzeugen dabei kunststofffreie Bereiche 17 über benachbarten Leiterbahnabschnitten 22. In diesen Bereichen können nebeneinanderliegende Bahnen zunächst noch zur Stabilisierung durch Querstege miteinander verbunden sein, die erst nach der Vorumspritzung aufgetrennt werden, wie im Ergebnis in der Fig. 4 dargestellt. Auf der Oberseite werden lediglich einzelne Stabilisierungsstege 18 hergestellt. Auch die Steckerpin 21 werden zumindest teilweise mit dem ersten Kunststoff 15 umspritzt.

In einem weiteren Schritt wird dann das vorumspritzte Stanzgitter 2 mit einem zweiten Kunststoff 16, vorwiegend nun auf der auf die Streulichtblende bezogene Oberseite, fertig umspritzt, wobei die kunststofffreien Bereiche 17 der Vorumspritzung großteils nun durch den zweiten Kunststoff 16 verschlossen werden. Werden alle Bereiche verschlossen, kann die Streulichtblende rundum ohne freiliegendes Potential hergestellt werden. Ist dies nicht erforderlich, können auch Teile des Stanzgitters ohne Umspritzung an der Unterseite verbleiben, wodurch die Streulichtblende leichter und mit geringerer Wärmekapazität herstellbar ist.

Der erste Kunstsoff kann beispielsweise ein Polyamid sein. Als zweiter Kunststoff kann ebenfalls ein Polyamid verwendet werden, beispielsweise PA6-GB50, oder ein Polybutylenterephthalat.

### Bezugszeichenliste

- 1: Körper
- 2: Heizleiterbahn
- 11: Boden
- 12: Seitenwände
- 14: Steckverbindergehäuse
- 15: erster Kunststoff
- 16: zweiter Kunststoff
- 17: kunststofffreie Bereiche der Vorumspritzung
- 18: Stabilisierungsstege
- 21: Steckerpins
- 22: Leiterbahnabschnitte

## Patentansprüche

1. Elektrisch beheizbare Streulichtblende für ein Bilderfassungsgerät eines Kraftfahrzeugs, mit einem Körper (1) aus Kunststoff,
**dadurch gekennzeichnet, dass**
der Körper (1) aus elektrisch isolierendem Kunststoff ist und
in dem Körper (1) eine aus einem Blech geformte elektrische Heizleiterbahn (2) angeordnet ist.

2. Streulichtblende nach Anspruch 1, **dadurch gekennzeichnet, dass** die Heizleiterbahn (2) mit einem ersten Kunststoff (15) vorumspritzt ist und der erste Kunststoff (15) und die Heizleiterbahn (2) mit einem zweiten Kunststoff (16) zumindest bereichsweise endumspritzt sind.

3. Streulichtblende nach Anspruch 2, **dadurch gekennzeichnet, dass** der erste Kunststoff (15) ein Polyamid ist und/oder der zweite Kunststoff (16) ein Polyamid, vorzugsweise PA6-GB50, oder ein Polybutylenterephthalat ist.

4. Streulichtblende nach einem der vorstehenden Ansprüche, **dadurch gekennzeichnet, dass** die Heizleiterbahn (2) aus dem Blech ausgeschnitten, vorzugsweise ausgestanzt ist.

5. Streulichtblende nach einem der vorstehenden Ansprüche, **dadurch gekennzeichnet, dass** die Heizleiterbahn (2) aus einer Nickelchromlegierung ist.

6. Streulichtblende nach einem der vorstehenden Ansprüche, **gekennzeichnet durch** einen Steckverbinder, wobei die Heizleiterbahn (2) Steckerpins (21) des Steckverbinders trägt, die von einem Steckverbindungsgehäuse (14) umgeben sind, das einstückig mit dem Köper (1) ausgebildet ist.

7. Streulichtblende nach Anspruch 6, **dadurch gekennzeichnet, dass** die Steckerpins (21) aus einem anderen Material als die Heizleiterbahn (2) sind, vorzugsweise aus einer Kupferlegierung.

8. Verfahren zum Herstellen einer Streulichtblende mit einem Körper (1) aus Kunststoff, **dadurch gekennzeichnet, dass** aus Blech Leiterbahnabschnitte (22), die mindestens eine zusammenhängende Heizleiterbahn (2) bilden, ausgeschnitten und danach durch Umspritzen der Heizleiterbahn (2) der Körper (1) hergestellt wird.

9. Verfahren nach Anspruch 8, **dadurch gekennzeichnet, dass** die Heizleiterbahn (2) zunächst mit einem ersten Kunststoff (15) vorumspritzt wird und danach der Körper (1) ausgebildet wird, indem der erste Kunststoff (15) und die Heizleiterbahn (2) mit einem zweiten Kunststoff (16) zumindest bereichsweise endumspritzt werden.

10. Verfahren nach Anspruch 9, **dadurch gekennzeichnet, dass** nebeneinander liegende Leiterbahnabschnitte (22) während der Vorumspritzung durch Querstege stabilisiert sind und die Querstege vor der Endumspritzung durchtrennt werden.
